# EUROPÄISCHE PATENTSCHRIFT

(11) **EP 0 776 866 B1**
(45) Veröffentlichungstag und Bekanntmachung des Hinweises auf die Patenterteilung: **24.06.1998**
(21) Anmeldenummer: 96119183.0
(22) Anmeldetag: 29.11.1996
(51) Int. Cl.: C03B 35/16, C03B 35/18, C03B 27/044

(54) **Horizontale Vorspannstrecke mit grosser Arbeitsbreite für Flachglas**
Horizontal tempering station of large working width for flat glass
Machine de trempe horizontale à grande largeur de travail pour les feuilles de verre

(30) Priorität: 02.12.1995 DE 19544995
(43) Veröffentlichungstag der Anmeldung: 04.06.1997
(73) Patentinhaber: Ingenieurgemeinschaft WSP Prof. Dr.-Ing. C.Kramer Prof. H.J. Gerhardt, M.Sc., 52074 Aachen (DE)
(72) Erfinder: Kramer, Carl, Prof. Dr. Ing., 52076-Aachen (DE)
(74) Vertreter: Marx, Lothar, Dr.

(56) Entgegenhaltungen:
- EP-A- 0 440 113
- DE-A- 3 346 818
- FR-A- 2 672 378
- GB-A- 2 109 327
- US-A- 4 577 674
- US-A- 4 787 504

## Beschreibung

Flachglas, insbesondere plane Scheiben für Architekturanwendungen, werden heute fast ausschließlich auf sogenannten Horizontalanlagen vorgespannt. Darunter versteht man Anlagen, in welchen die Glasscheiben auf einem Rollengang transportiert werden. Der Vorspannprozeß findet hinter dem Rollenherdofen statt. Der Rollengang der Vorspannstrecke ist üblicherweise, wie z. B. in DE 4002546.A1 beschrieben, in das untere Düsenfeld integriert. Insbesondere bei Anlagen für größere Arbeitsbreite - das sind Anlagen für Chargenbreiten größer 1,5 m - die aus Gründen der entsprechend größeren Rollenspannweite mit Rollen größeren Durchmessers ausgestattet werden müssen, bereitet diese Integration der Rollen in das untere Vorspanndüsenfeld Schwierigkeiten. Einerseits möchte man nämlich mit Rücksicht auf die geringste mögliche Länge der vorzuspannenden Scheiben und zur Vermeidung großer Biegemomente der beim Eintritt in die Vorspannstrecke noch weichen Glasscheiben die Rollenteilung so klein wie möglich machen, andererseits wird aber bei Kleiner Rollenteilung und großem Rollendurchmesser der für den Einbau der meist als Düsenrippen ausgeführten unteren Düsen verfügbare Platz derart eingeschränkt, daß der Freiraum für die Rückströmung der Vorspannluft von der Glasscheibe sehr beengt ist. Dadurch entsteht unter der Glasscheibe in den Anlagen nach dem Stand der Technik ein großer Überdruck, der insbesondere bei dünnen Scheiben, die das geringste Flächengewicht aufweisen, aber die höchsten Vorspanndrücke erfordern häufig zu einem Aufschwimmen der Scheiben auf dem Rollengang führt, wodurch die Scheiben nicht mehr definiert vom Rollengang transportiert werden, aneinander anstoßen und in der Vorspannstrecke zerbrechen. Das Aufschwimmen ist besonders dann ein Problem, wenn eine große Charge in einer breiten Vorspannanlage aus vielen Kleinen nebeneinander aufgelegten Scheiben besteht.

Bei dickeren Scheiben besteht zwar nicht mehr die Gefahr des Aufschwimmens, da zusätzlich zu dem höheren Scheibengewicht auch aufgrund des reduzierten Vorspanndruckes die aufstaubedingte Druckänderung kleiner ist, es kommt aber durch die Behinderung der Abströmung senkrecht von der Scheibe insbesondere im Randbereich zu einer Abströmung parallel zur Scheibe. Die Folge ist eine ungleichmäßige Abkühlung über der Scheibenfläche, und zwar ist die Abkühlung am Scheibenrand größer als in der Scheibenmitte. Folglich baut sich am Scheibenrand eine flächenhafte Druckvorspannung nach Art einer Ringspannung auf, die zu Verformungen und besonders störend zu Bistabilitäten der vorgespannten Scheibe führen kann. Darunter versteht man eine Scheibe, deren Mitte sich bei vertikal auf eine Seitenkante gestellter Scheibe von der einen Seite zur anderen durchdrücken läßt und dann in dieser Stellung verbleibt. Diese Neigung zur Bistabilität ist um so größer, je größer die Scheibenabmessungen sind und tritt insbesondere bei quadratischen Formaten auf. Das beschriebene Phänomen ist ein Mangel, der bei den Vorspannstrecken für größere Arbeitsbreite nach dem heute bekannten Stand der Technik, bedingt durch den großen erforderlichen Rollendurchmesser bei begrenzter Rollenteilung, mehr oder weniger stark ausgeprägt immer auftritt.

Ein weiteres Problem entsteht durch die Transportrollen mit großem Durchmesser bei begrenzter Rollenteilung, wenn dünne Glasscheiben - Glasstärke 4 mm und kleiner - vorgespannt werden müssen. Durch die im Verhältnis zur Rollenteilung dicken Rollen wird nämlich der Raum reduziert, in welchem die Düsenöffnungen angeordnet werden können, die zur Erlangung des hohen Wärmeüberganges erforderlich sind. Dies ist bei dünnen Glasscheiben besonders wichtig, da der zur Erzielung einer bestimmten Vorspannung erforderliche Wärmeübergang der Glasdicke etwa umgekehrt proportional ist. Günstige Verhältnisse liegen bei Vorspannstrecken vor, deren Rollenteilung Kleiner als ca. 125 mm ist bei einem Rollendurchmesser Kleiner 45 mm und entsprechend breiten unteren Düsenrippen und ausreichend breiten Rückströmspalten.

Eine Lösung des beschriebenen Problems kann eine Verkürzung der Rollenspannweite durch entsprechende Zwischenlagerung bieten, da dann der Rollendurchmesser entsprechend geringer gewählt werden kann. Eine Vorspannstrecke mit in der Mitte geteilten und zwischengelagerten Rollen ist aus US-PS 4 787 504 bekannt. Diese Vorspannstrecke ist für gebogene Glasscheiben konzipiert und Teil einer Einrichtung zum Vorspannen gebogener Scheiben, die in einer der Vorspannstrecke vorgeschalteten Biegeanlage die gewünschte Biegeform erhalten. Die Rollen dieser Biegeanlage sind ebenfalls mittig geteilt und an der Teilstelle zwischengelagert wobei durch Krafteinleitung in die deformierbaren Wellen an der Zwischenlagerstelle die gewünschte Biegeform eingestellt wird. Diese aus einem elastisch deformierbaren Kern mit um den Kern rotierenden kurzen Rollenelementen, die miteinander Formschluß aufweisen, bestehenden Rollen sind aber nicht geeignet, das beschriebene Problem zu lösen. Die Vorspanndüsen sind unterhalb der Rollen angeordnet und die Rollenteilung ist wegen der notwendigerweise aufwendigen Konstruktion aufgrund des hierzu erforderlichen Rollendurchmessers kaum kleiner als bei einer einfachen starren durchgehenden Rolle. Hierzu kommt noch, daß die Verwendung eines elastisch verformbaren Trägers bei einer Vorspannanlage für planes Glas zu Qualitätsminderung beim Vorspannen führt, da eine durch Querkraft verhältnismäßig leicht verformbare elastische Welle keine exakte Planlage der Glasscheiben garantiert, insbsondere wenn dünne Glasscheiben mit vergleichweise hoher Geschwindigkeit durch die Vorspannstrecke transportiert werden müssen, was entsprechend hohe Drehzahl der Transportrollen erfordert und fliehkraftbedingte Auslenkungen des elastischen Rollenkernes begünstigen würde.

Es besteht also die Aufgabe, eine Vorspannstrecke mit Transportrollen zu schaffen, welche die vorbeschriebenen Nachteile vermeidet und geeignet ist, auch breite Glasscheiben exakt horizontal zu führen. Dies wird mit der Vorspannstrecke nach der Erfindung erreicht.

Die Vorspannstrecke nach der Erfindung besteht aus einem in üblicher Weise aufgebauten oberen und unteren Düsenfeld, wobei beim unteren Düsenfeld unabhängig von der Arbeitsbreite eine optimal geringe Teilung der Düsenrippen - typisch kleiner als 125 mm - bei entsprechender Breite der Düsenkörper und der Rückströmräume vorhanden ist, und die Transportrollen einen in Bezug auf die Arbeitsbreite der Vorspannstrecke sehr geringen Durchmesser - typisch 45 mm und kleiner - aufweisen. Dies wird dadurch erreicht, daß die Transportrollen mindestens einfach geteilt sind und an der Teilstelle ein Zwischenlager aufweisen, das auf einer mit der äußeren Rollenlagerung verbundenen Tragkonstruktion aufsitzt, die im Rückströmraum zwischen zwei benachbarten Düsenrippen untergebracht ist.

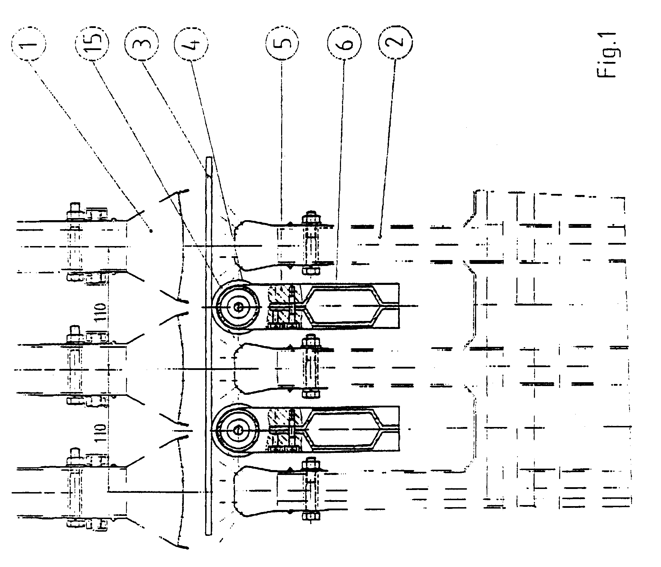

Vorteilhafte Ausführungsformen der Erfindung werden im folgenden anhand der Figuren 1 bis 4 beschrieben. Es zeigen im einzelnen
- **Figur 1**: einen Querschnitt für einen Ausschnitt aus einer Vorspannstrecke nach der Erfindung;
- **Figur 2**: eine Gesamtansicht einer zweifach unterteilten Vorspannstreckenwelle nach der Erfindung;
- **Figur 3**: eine vergrößerte Darstellung der erfindungsgemäßen Zwischenlagerung;
- **Figur 4**: einen vergrößerten Querschnitt der Welle mit vorteilhaft ausgebildeter Tragkonstruktion, dargestellt an der in Figur 2 mit A-A gekennzeichneten Stelle.

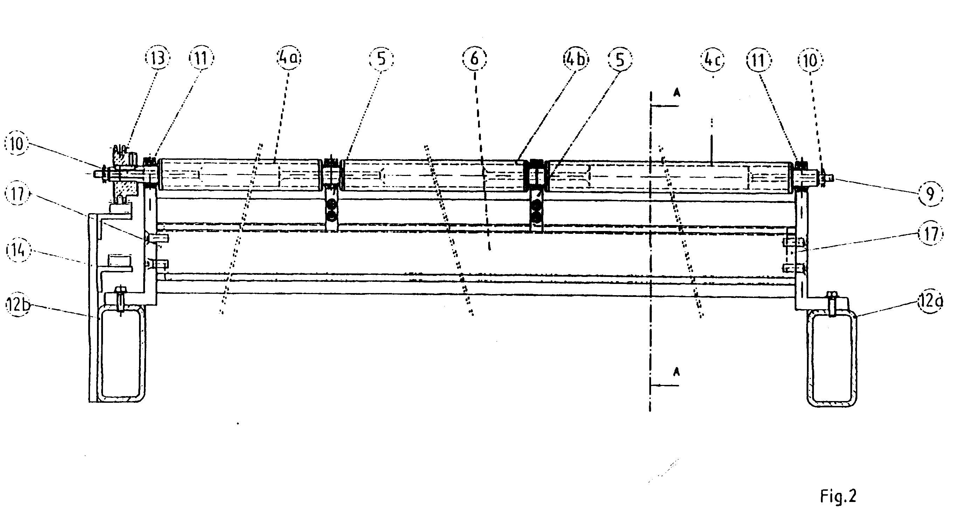

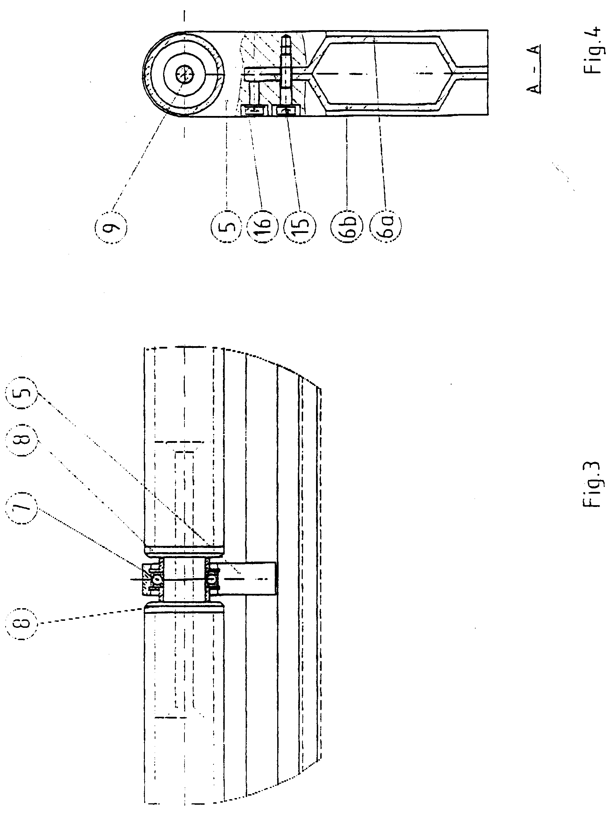

Zwischen einem oberen Düsenfeld, bestehend aus Düsenrippen (1) und einem unteren Düsenfeld, bestehend aus Düsenrippen (2), wird die Glasscheibe (3) auf den Rollen (4) geführt. Erfindungsgemäß ist die Rolle (4) mindestens einfach unterteilt. In Figur 2 ist eine zweifache Unterteilung der Rolle, die nunmehr aus den Teilstücken (4a), (4b) und (4c) besteht, dargestellt. Die Rollen (4) sind in bekannter Weise zur Vermeidung des direkten Kontaktes zwischen Rolle und Glas mit Laufringen (15) oder einer Bandage aus geeignetem Material versehen. An den Teilstellen befinden sich Lagerstützstellen (5). Diese Lagerstützstellen sind auf der unter der Rolle befindlichen Tragkonstruktion (6), die eine gleiche oder Kleinere Breite als der Rollenaußendurchmesser, einschließlich Laufringen oder Bandage, aufweist, untergebracht. Diese Tragkonstruktion ist ohne nennenswerte Strömungsstörung in den Rückströmkanälen zwischen den unteren Düsenrippen (2) angeordnet. Günstig im Hinblick auf geringe Strömungsstörung erweist sich die im Detail in Figur 4 gezeigte Form der unteren Tragkonstruktion, nämlich die Ausbildung aus zwei gekanteten Blechschalen (6a) und (6b), die z. B. durch Punktschweißen miteinander verbunden sind. Die auf diese Weise mögliche kostengünstige und zugleich präzise Fertigung der als Kastenträger ausgebildeten Tragkonstruktion gestattet die einfache Befestigung der Lagerhalter (5) mit der Durchgangsschraube (15) und der Klemmschraube (16). In den Lagerhaltern (5) sind mit Dauerschmierung versehene mit Schutzdeckeln ausgerüstete Kugellager (7) untergebracht. In diesen Kugellagern sitzen die geteilten Lagerzapfen (8), die sich entweder gegeneinander oder gegen den Innenring des Kugellagers abstützen. Die Rollenstücke (4), bzw. (4a), (4b), (4c), sind Rohre, z. B. Präzisionsstahlrohre - die mit einer zentrierten Ausdrehung auf die Lagerzapfen aufgeschoben werden. Die Verbindung zwischen den einzelnen Rollenstücken (4) erfolgt durch Kraftschluß mittels des Zugankers (9), der an den beiden Rollenenden mit Gewinde versehen ist und mit Sicherungsmuttern, z. B. den Kronmuttern (10) vorgespannt wird. Durch diese Vorspannung wird nicht nur das Antriebsmoment, das in üblicher Weise mit dem Kettenrad (13) durch die auf der Führung mit Halterung (14) laufenden Kette angetrieben wird, übertragen; sondern durch die Zugvorspannung wirkt die Rolle mit dem darunter angeordneten Tragbalken (6) wie ein Biegeträger mit entsprechend vergrößertem Abstand zwischen Obergurt und Untergurt. Die Verbindung zwischen der Rolle und dem Tragbalken (6) erfolgt an beiden Rollenenden durch die Lagerhalter (11), die vorteilhaft und einfach als stabile Winkelprofile ausgebildet sind. Die Befestigung des Tragbalkens an diesen Winkelprofilen erfolgt durch die in den Tragbalken eingesetzten Endstücke (17), die mit dem als Winkelprofil ausgeführten Lagerhalter (11) verschraubt werden und auf dem rechten und linken Tragrahmenprofil (12a), (12b) für den Rollengang befestigt sind.

Bei Anlagen mit großer Breite kann es vorteilhaft sein, die Bauhöhe des Trägers (6) über der Rollenbreite zu verändern, um den Querschnitt dem Verlauf des Biegemoments über der Trägerlänge anzupassen. Dies kann z. B. durch entsprechend schräg gekantete Halbschalen einfach und kostengünstig verwirklicht werden.

## Patentansprüche

1. Horizontale Vorspannstrecke für Flachglas mit einem oberen und einem unteren Düsensystem und einem in das untere Düsensystem integrierten Rollengang zum Transport der Glasscheibenchargen mit einer Breite von über 1,5 m, **dadurch gekennzeichnet**, daß bei einer Rollenteilung < 125 mm die Rollen (4) mindestens einmal geteilt und an den Teilstellen zwischengelagert sind, wobei sich die Zwischenlagerung (5) auf einer unter der Rolle befindlichen Tragkonstruktion (6) abstützt und diese Tragkonstruktion mit den Lagerungen der Rolle an ihren Enden verbunden ist und, daß die einzelnen starren Teile der Rolle (4a, 4b, 4c) an den Lagerstellen durch Kraftschluß gehalten werden, wobei der Kraftschluß durch einen in der Achse der Welle verlaufenden vorgespannten Zuganker (9) erzeugt wird.

2. Vorspannstrecke nach Anspruch 1, **dadurch gekennzeichnet**, daß die Tragkonstruktion (6) unter der Rolle aus einem gekanteten Blechprofil (6a, 6b) besteht, dessen Breite kleiner gleich dem Rollenaußendurchmesser ist.

3. Vorspannstrecke nach Anspruch 2, **dadurch gekennzeichnet**, daß die Bauhöhe des gekanteten Profils sich über die Rollenspannweite ändert.

4. Vorspannstrecke nach mindestens einem der Ansprüche 1 bis 3, **dadurch gekennzeichnet**, daß die mittels des Zugankers (9) vorgespannte geteilte Rolle (4) den Obergurt und die Unterkonstruktion den Untergurt eines auf Durchbiegung nach unten belasteten Trägers bilden, dessen Ober- und Untergurt durch die Lagerabstützungen miteinander verbunden sind.

5. Vorspannstrecke nach mindestens einem der Ansprüche 1 bis 4, **dadurch gekennzeichnet**, daß die Tragkonstruktion unter der Rolle im Rückströmraum zwischen den zu beiden Seiten der Rolle (4) angeordneten unteren Düsenrippen (2) untergebracht ist.

## Claims

1. A horizontal tempering station for flat glass comprising an upper and a lower nozzle system and a rollway integrated in the lower nozzle system for transporting sheet glass batches having a width of more than 1.5 m, characterized in that for a roller spacing < 125 mm said rollers (4) are sectioned at least once and intermediately mounted at the sectioning points, said intermediate mount (5) being supported by a supporting structure (6) located below said roller and said supporting structure being connected to said mounts of said roller at the ends of the latter, and that the individual rigid sections of said roller (4a, 4b, 4c) are supported at said mounting locations by frictional connection, said frictional connection being generated by a pretensioned tension or tie rod (9) extended in the axis of the shaft.

2. The tempering station as set forth in claim 1, characterized in that said supporting structure (6) under said roller consists of an angled sheet-metal section (6a, 6b), the width of which is smaller than or equal to the roller outer diameter.

3. The tempering station as set forth in claim 2, characterized in that the overall height of said angled section changes over the span of said rollers.

4. The tempering station as set forth in at least one of the claims 1 to 3, characterized in that said sectioned roller (4) pretensioned by means of said tension rod (9) forms said upper run and said lower structure forms the lower run of a beam loaded for downwards bending, the upper and lower run of which are connected to each other by said mounting supports.

5. The tempering station as set forth in at least one of the claims 1 to 4, characterized in that said supporting structure is accommodated under said roller in the return flow space between said lower banks of nozzles (2) arranged on both sides of said roller (4).

## Revendications

1. Ligne de trempe horizontale pour verre plat comportant un système de buses supérieur et un système de buses inférieur ainsi qu'un train de rouleaux intégré dans le système de buses inférieur pour le transport des charges de vitres d'une largeur supérieure à 1,5 m, caractérisée en ce que dans le cas d'une division des rouleaux < 125 mm, les rouleaux (4) sont divisés au moins une fois et sont tourillonnés de manière intermédiaire aux points de division, le palier intermédiaire (5) prenant appui sur une construction de support (6), se trouvant sous le rouleau et cette construction de support est reliée aux paliers du rouleau à ses extrémités, et en ce que les différents éléments rigides du rouleau (4a, 4b, 4c) sont maintenus aux emplacements de paliers par assemblage à force, l'assemblage à force étant produit par un tirant (9), précontraint, s'étendant dans l'axe de l'arbre.

2. Ligne de trempe selon la revendication 1, caractérisée en ce que la construction de support (6) sous le rouleau est constituée d'un profilé en tôle (6a, 6b) plié à arête vive, dont la largeur est inférieure ou égale au diamètre extérieur du rouleau.

3. Ligne de trempe selon la revendication 2, caractérisée en ce que la hauteur de construction du profilé plié à arête vive varie sur la portée du rouleau.

4. Ligne de trempe selon l'une au moins des revendications 1 à 3, caractérisée en ce que le rouleau (4), divisé précontraint au moyen du tirant (9), forme le brin supérieur et l'infrastructure forme le brin inférieur d'un support sollicité vers le bas en flexion, dont le brin supérieur et le brin inférieur sont reliés entre eux par les appuis de palier.

5. Ligne de trempe selon l'une au moins des revendications 1 à 4, caractérisée en ce que la construction de support sous le rouleau est logée dans l'espace de reflux, entre les nervures de buses (2) inférieures disposées des deux côtés du rouleau (4).
